# EUROPEAN PATENT SPECIFICATION

(11) **EP 2 983 480 B1**
(45) Date of publication and mention of the grant of the patent: **07.11.2018**
(21) Application number: 14721779.8
(22) Date of filing: 11.04.2014
(51) Int. Cl.: A21D 10/04, A21D 13/02

(54) **DOUGH OR BATTER COMPRISING FUNCTIONALIZED GRAINS**
TEIG MIT FUNKTIONALISIERTEN KÖRNEN
PÂTE COMPRENANT DES GRAINS FONCTIONNALISÉS

(30) Priority: 11.04.2013 BE 201300266
(43) Date of publication of application: 17.02.2016
(73) Proprietor: Puratos N.V., 1702 Groot-Bijgaarden (BE)
(72) Inventor: DE PAUW, Paul, B-4219 Wasseiges (BE); ARNAUT, Filip, B-1761 Roosdaal (BE)
(74) Representative: Pappaert, Kris
(86) International application number: PCT/EP2014/057339
(87) International publication number: WO 2014/167081

(56) References cited:
- EP-A1- 0 821 884
- EP-A2- 1 099 383
- WO-A1-2005/036985
- WO-A1-2007/106941
- WO-A1-2008/089893
- GB-A- 1 127 246
- US-A- 4 948 619
- US-A1- 2007 054 016
- US-A1- 2010 310 739

## Description

### FIELD OF THE INVENTION

The present invention provides in dough or batter products and their use in bakery products, wherein the dough or batter product comprises functionalized grains. The functionalized grains more specifically comprise a high concentration of functional ingredients allowing a reduction of the total amount of said functional ingredients in said dough or batter product.

### BACKGROUND OF THE INVENTION

Breads and other bakery and patisserie products based on doughs and/or batters contains a variety of ingredients. In some circumstances the amount of some of these ingredients needs to be reduced, for health or cost reasons. Typical examples are salt, sweeteners (sugar), flavors and aromatic compounds. In some other circumstances, some ingredients also need to be protected in order to be effective when and where desired. This is for instance the case for enzymes, aromas, baking powders, bicarbonate and other inorganic components, organic acids, micro-organisms, oils, fats and emulsifiers.

Grains, seeds and particulate fractions derived from grains and seeds are used widely for addition to bakery and patisserie products including for instance breads, biscuits, muffins, cookies and the like. These grains or seeds, hereafter referred to "grains", are added to bakery products to improve the nutritional value of the bakery product or to vary the appearance, taste or texture of the bakery product. Grains may comprise for example whole grains of wheat, rye, barley, oats, rice, soy, triticale or other seeds such as linseed, sunflower or nuts.

Unprocessed grains typically have a minimal capacity to imbibe moisture from the dough or batter in which the grains are used and also, during the baking process only little amounts of moisture can be taken up by the grains. As a result, grains within bakery products produced using unprocessed grains will be very hard and dry both in the crust and in the crumb leading to potential damage to the teeth of consumers. Therefore, grains are typically softened prior to or during the baking process using different techniques including pre-soaking of unprocessed grains in cold or hot water for up to several hours or steaming of unprocessed grains.

WO2005/036985 A1 discloses a method and device for the nixtamalisation of com. EP187266 A1 discloses a method for producing a whole-grain containing composite food product, comprising cooking whole grain cereal grain particles in the presence of water effective to gelatinize starch content of the whole grain cereal particles to provide gelatinized whole grain cereal grain particles. EP1600059 A1 discloses a grain immersion method. WO99/37169 A1 discloses the preparation of functionliazed rye grains wherein the grains were heated before being passed hot between smooth rolls of a roller mill to form a capillary network.

The softening of grains provides in softer grains which are edible and improve the organoleptic properties of the bakery product. Also, the softening of the grains allows them to be more digestible, thereby improving their nutritive value. The pre-soaking of grains is also a valuable technique for removing certain unwanted compounds. Grains typically comprise also a number of enzyme inhibitors such as phytic acid, an insoluble compound of phosphorus and inositol which binds minerals such as calcium, zinc, magnesium and iron to make them unavailable. While cooking the grains typically deactivates the enzyme inhibitors, cooking also destroys the enzymes themselves.

The present invention solves the problems indicated above by providing bakery products comprising a lower amount of functional ingredients such as salt and/or sugars, while still maintaining the quality and organoleptic properties of the bakery product.

### FIGURES

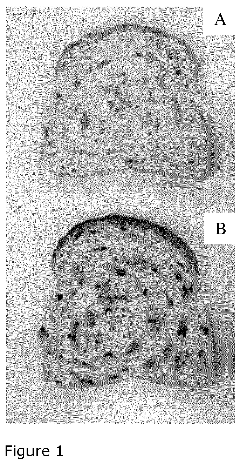

Figure 1. Illustration of the appearance of slices of a control bread (A) and a bread made with kernels functionalized with a dark malt extract (B).

### SUMMARY OF THE INVENTION

The present invention relates to a food product comprising functionalized grains, wherein said food product is preferably the precursor of a bakery product. More particularly, said food product is a dough or a batter product. According to the present invention functionalized grains are grains impregnated with one or more functional ingredient(s).

The present invention relates to a dough or batter product for use in bakery products, characterized therein that said dough or batter product comprises functionalized grains wherein the total amount of functional ingredients in said grains are at least 40 wt% of the total amount of said functional ingredients in said dough or batter product.

More particularly, said dough or batter product comprises at least 1 wt% of said functionalized grains. According to a particular embodiment, said functional ingredients are one or more ingredients chosen from salty or salty-like ingredients, sugars, ethanol, baking powder(s), diacetyl, natural or synthetic aromas compounds, flavors and/or flavor improvement compounds, enzymes, oxidizing or reducing agents, emulsifiers, polyols, gums, fats, oils, fatty materials, organic acids, vitamins, antimicrobial agents, coloring agents and/or food-grade microorganisms.

According to a particular embodiment said grains are one or more grain types chosen from wheat, buckwheat, barley, oat, spelt, rye, sorghum, maize, triticale, millet, teff, sunflower, sesame, linseed, amaranth, flaxseed, pumpkin, rapeseed soybean, farro, kamut, quinoa, beans, peas, chick peas, nuts and/or rice.

More particularly, said dough or batter product comprises a mixture of functionalized and non-functionalized grains.

The present invention further provides in a method for impregnating grains comprising the steps of:
a) soaking grains in an aqueous solution;
b) separating said grains from said aqueous solution;
c) resuspending said grains in a liquid functionalization solution comprising one or more functional ingredients under a vacuum of less than 200 mbar;
d) releasing said vacuum;
e) maintaining said grains submerged in said liquid functionalization solution, thereby functionalizing said grains; and;
f) optionally separating said functionalized grains from said liquid functionalization solution and optionally drying said functionalized grains.

The present invention further provides in a method for obtaining a dough or batter product for use in bakery products, comprising the steps according to the method for impregnating grains and further comprising the step of incorporating into a dough or batter said functionalized grains. The present invention further provides in a method for the production of a bakery product, comprising the steps according to the method for obtaining a dough or batter product for use in bakery products and further comprising the step of baking said dough or batter comprising said functionalized grains, thereby obtaining a bakery product comprising said functionalized grains.

More particularly, the methods according to the present invention further provide that the total amount of functional ingredients in said functionalized grains are at least 40wt% of the total amount of said functional ingredients in said dough or batter product. More particularly, said methods provide that the soaking step allows to obtain soaked grains with a dry matter between about 15% (w/w) and about 80% (w/w) and/or a dry matter of the aqueous soaking solution lower than about 10% when the grains are soaked in four times their weight.

According to a particular embodiment of the methods according to the invention, the said functional ingredients are one or more ingredients chosen from salty or salty-like ingredients, sugars, ethanol, baking powder(s), diacetyl, natural or synthetic aromas compounds, flavors and/or flavor improvement compounds, enzymes, oxidizing or reducing agents, emulsifiers, polyols, gums, fats, oils, fatty materials, organic acids, vitamins, antimicrobial agents, coloring agents and/or food-grade microorganisms.

In a particular embodiment in the methods provided herein the resuspension according to step c) is maintained for about 1 to about 30 minutes. More particularly, said liquid functionalization solution comprises between 10 and 100 % of said functional ingredient. Even more particularly, at least 1 wt% of said functionalized grains are incorporated into said dough or batter.

In a particular embodiment, the present invention provides a bakery product obtained according to the methods as described herein, prepared by baking a dough or batter product as disclosed herein.

These and further aspects and embodiments are described in the following sections and in the claims.

### DETAILED DESCRIPTION OF THE INVENTION

Unless defined otherwise, all technical and scientific terms used herein have the same meaning as commonly understood by one of ordinary skill in the art to which this invention belongs. Although any methods and materials similar or equivalent to those described herein may be used in the practice or testing of the present invention, the preferred methods and materials are now described.

In this specification and the appended claims, the singular forms "a", "an", and "the" include plural references unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The recitation of numerical ranges by endpoints includes all numbers and fractions subsumed within the respective ranges, as well as the recited endpoints.

The present invention relates to a food product comprising functionalized grains, wherein said food product is preferably the precursor of a bakery product. More particularly, said food product is a dough or a batter product comprising functionalized grains. According to the present invention functionalized grains are grains impregnated with one or more functional ingredient(s).

The present invention provides food products and methods that have been found to evenly distribute functional ingredients and/or molecules in said food products. The food products and methods according to the present invention allow the reduction of the total amount of specific ingredients in food products while keeping their functionality and not altering the organoleptic properties of the resulting bakery product. More particularly, augmenting the concentration of the functional ingredients in the grains (thereby obtaining the functionalized grains) allows a reduction of the amount of functional ingredients in the batter or dough, a reduction to such an extent that the total amount of functional ingredients in the dough or batter product comprising the functionalized grains is lower compared to a dough or batter product comprising the non-functionalized grains, while still maintaining similar or identical organoleptic properties.

In another embodiment the use of functionalized grains in a dough may have as a consequence a slow release of the functional ingredient(s) in the dough, thereby allowing its optimal performance.

In the present invention typical innovative functionalities are provided to grains. More particularly, grains are impregnated with functional components using specific methods or technologies as disclosed herein. The impregnation does not affect the overall granular structure of the grain, thereby maintaining the texture of the resulting bakery product. The functionality concerns, besides the inherent nutritive value like for example his fiber-rich composition, the use of the grain as a natural barrier for the impregnated components in interaction with the surrounding matrix.

According to a particular embodiment, the present invention provides in a dough or batter product for use in bakery products, characterized in that said dough or batter product comprises functionalized grains wherein the total amount of functional ingredients in said grains prior to incorporation to the dough or batter is at least 40 wt% of the total amount of said functional ingredients in said dough or batter product. More preferably, the total amount of functional ingredients in said grains is at least 45 wt%, 47.5 wt%, 50 wt%, 52.5 wt%, 55 wt%, 60 wt%, 65 wt%, 70 wt%, 75 wt%, 80 wt%, 85 wt%, 90 wt%, 95 wt% of the total amount of said functional ingredients in said dough or batter product, even up to 100 wt%.

In a particular embodiment the dough or batter product according to the present invention provides that said one or more functional ingredient(s) are comprised both in the functionalized grains and in the dough (without the functionalized grains).

More particularly, the total amount of functional ingredients in said grains is between 40 wt% and 95 wt% of the total amount of said functional ingredients in said dough or batter product. More preferably, the total amount of functional ingredients in said grains are between 45 wt% and 85 wt% of the total amount of said functional ingredients in said dough or batter product. More preferably, the total amount of functional ingredients in said grains are between 50 wt% and 80 wt% of the total amount of said functional ingredients in said dough or batter product. More preferably, the total amount of functional ingredients in said grains are between 50 wt% and 75 wt% of the total amount of said functional ingredients in said dough or batter product.

In the present invention the term "bakery product" refers to any type of bakery or patisserie products known in the art, such as for instance selected from the group comprising bread, soft rolls, bagels, donuts, Danish pastry, hamburger rolls, pizza, pita bread, ciabatta, cake, baguettes, rolls, crackers, biscuits, cookies, pie crusts, rusks and other baked products, and preferably cake, baguettes, hamburger rolls, sweet dough breads and lean dough breads. More preferably the present invention refers to any types of bread products known in the art.

The "grains", "seeds", "beans", "nuts", "cereals" or "pseudo-cereals" as used interchangeably in the context of the present invention refer to edible components of plants used widely for addition in bakery products as described above but also in cereal-rich foods like corn-flakes, extruded foods, popcorn, etc. As used in the context of the present invention, the terms refer to the edible components of plants of for instance, but not limited to the botanical families of the Poaceae, Asteraceae, Pedaliaceae, Linaceae or Fabaceae including but not limited to species such as wheat, buckwheat, barley, oat, spelt, rye, sorghum, maize, triticale, millet, teff, sunflower, sesame, linseed, amaranth, flaxseed, pumpkin, rapeseed soybean, farro, kamut, quinoa, beans, peas, chick peas, and/or rice. Other starch-rich grains or seeds are also advantageously used in the present invention. Examples are nuts (cashews, almonds, hazelnuts, peanuts) or (extruded) starch granules. Other grain particulates are also advantageously used in the present invention. Examples are pearled grains, (partially) dehulled grains, maize grits, kibbled rye, barley, soy, wheat, oats and the like. Preferably, the grains are chosen among the group of wheat, barley, rye, sorghum, sesame, millet, spelt, teff, maize, sunflower and/or rice. More preferred grains are wheat, barley, rye, sorghum, sesame and sunflower. Even more preferred grains are wheat, rye or barley.

The term "functionalized grains", in the context of the present invention, refers to grains which have been impregnated with one or more functional ingredient(s). The functionalized grains are characterized by either comprising one or more functional ingredients which are not naturally present in the natural grains or comprising one or more functional ingredients in a concentration higher compared to the concentration of said functional ingredient in the natural grains. Accordingly, grains are functionalized by either impregnating the grains with a functional ingredient which does not occur in the natural grains, or by impregnating the grains with a functional ingredient already occurring in the natural grains, thereby increasing the concentration of said functional ingredient in said grains and obtaining functionalized grains.

More particularly, the functionalized grains are characterized by having a concentration of functional ingredient in said grains which is at least 10, 15 or 20 times higher compared to the concentration of said functional ingredient in the dough or batter without said grains. More particularly, the concentration of the functional ingredient in the functionalized grains is at least 10 times higher than the concentration of the functional ingredient in the dough or batter without the grains. More particularly, the concentration of the functional ingredient in the functionalized grains is at least 15 times higher than the concentration of the functional ingredient in the dough or batter without the grains. Preferably, the concentration of the functional ingredient in the functionalized grains is at least 20 times higher than the concentration of the functional ingredient in the dough or batter without the grains.

The functionalized grains used in the present invention provide a natural barrier protecting the content of the functionalized grain in its interaction with the surrounding matrix. The content of the functionalized grain is therefore for example protected against osmotic pressure or solubilization of functional components, or against (early) flavor, acidity, and/or enzyme release. Conversely the surrounding matrix is protected against osmotic pressure from the grain content. As a result, the functionalized grains can be applied for a variety of applications including, but not limited to, reduction of salt and/or sugar content in bakery products, retention and/or reduction of flavor components in bakery products, (partial) replacement of yeast by baking powder(s), improvement of the texture and/or organoleptic properties of the bakery products, reduction of yeast activity inhibition by acids produced by lactic acid bacteria or acetic acid bacteria (LAB and AAB), reduction of yeast activity inhibition by antimolding agents, improvement of oils or fats flavors and/or functionality, improvement or enhancement of the visibility of the grains within the crumb by colouring agents, prevention of microorganisms inactivation.

The term "impregnate" as used in the present context refers to methods where the functional ingredients as disclosed herein are introduced into the grains. The present invention discloses novel methods and technologies that allow the impregnation of grains with functional ingredients.

In a preferred embodiment of the present invention the functionalized grains are distributed homogeneously throughout said dough or batter product, thereby allowing obtaining a baked product with an evenly distributed functional component.

In a particular embodiment, the dough or batter product according to the invention comprises at least 1 wt% of said functionalized grains (calculated as functionalized grain dry matter/total dough or batter weight). More particularly, said dough or batter product comprises at least 1.5 wt% of said functionalized grains. More particularly, said dough or batter product comprises at least 2 wt% of said functionalized grains. More particularly, said dough or batter product comprises at least 2.5 wt% of said functionalized grains. More particularly, said dough or batter product comprises at least 3 wt% of said functionalized grains. More particularly, said dough or batter product comprises at least 3.5 wt% of said functionalized grains. More particularly, said dough or batter product comprises at least 4 wt% of said functionalized grains. According to usual recipes in the art, the dough may contain up to 20wt% or even 30 wt% of (functionalized) grains. The amount of grains added to the dough or batter product highly depends on the type of grains used and the concentration of the functional ingredient(s) in the functionalized grains. A skilled artisan will easily understand that a lower amount of small grains is required to obtain a good repartition of the functional ingredient in the dough.

In a further particular embodiment, the dough or batter product comprises functionalized grains according to the invention wherein the functional ingredients are typical food-grade ingredients preferably one or more food-grade ingredients chosen from salty or salty-like ingredients, sugars or sweeteners, ethanol, baking powder(s), diacetyl, natural or synthetic aromas compounds, flavors and/or flavor improvement compounds, enzymes (amylases, xylanases, lipases, oxidases, lipoxigenases, proteases,...), oxidizing or reducing agents, emulsifiers, polyols, gums, fats, oils, fatty materials, organic acids, vitamins, antimicrobial agents, coloring agents, food-grade microorganisms (yeasts such as *Saccharomyces cerevisiae*, bacteria such as lactic acid bacteria or acetic acid bacteria such as *Acetobacter*).

Preferably, one or more of said functional ingredients is a salty or salty-like ingredient. Examples are NaCl, KCl, peptides, potassium lactate, taste enhancers such as glutamate, etc. Preferably these salty or salty-like ingredients are NaCl or KCl, more preferably NaCl. Preferably, said salt is present at a concentration of at least 0.5 wt%, at least 1 wt%, at least 2 wt%, at least 3 wt%, at least 4 wt%, at least 5 wt%, at least 7.5 wt%, at least 10 wt%, at least 12 wt%, at least 14 wt%, at least 15 wt%, at least 17.5 wt%, at least 20 wt%, at least 25 wt%, or up till 30 wt% (weight % of salt versus grain dry matter). Preferably said salt is NaCl and present in a concentration of at least 0.5 wt%, at least 1 wt%, at least 2 wt%, at least 3 wt%, at least 4 wt%, at least 5 wt%, at least 7.5 wt%, at least 10 wt%, at least 12 wt%, at least 14 wt%, at least 15 wt%, at least 17.5 wt%, at least 20 wt%, at least 25 wt%, or up till 30 wt%. Preferably said salt is NaCl and present in a concentration of at least 10 wt%. The preferred concentration of salt highly depends on the type of grains used. Depending on the types of grains different concentrations of salt can be reached.

Preferably, one or more of said functional ingredients is a sugar or a sweetener, preferably glucose, fructose, aspartame, sucrose, stevia and/or other synthetic or natural sweeteners. Preferably, said sugar is present in said functionalized grains at a concentration of at least 5 wt%, at least 7.5 wt%, at least 10 wt%, at least 12 wt%, at least 14 wt%, at least 15 wt%, at least 17.5 wt%, at least 20 wt%, at least 25 wt%, at least 30 wt% (weight % of sugar versus grain dry matter). Preferably said sugar is glucose or fructose and present in a concentration of at least 5 wt%, at least 7.5 wt%, at least 10 wt%, at least 15 wt%, at least 20 wt%, at least 25 wt%, at least 30 wt%, at least 40 wt%, at least 50 wt% or more. The preferred concentration of sugar highly depends on the type of grains used. Depending on the types of grains different concentrations of sugar can be reached. A skilled artisan will understand that lower amount(s) of (high intensity) sweetener(s) is (are) required to obtain the same sweetening effect in the dough. The recalculation of the required concentrations of (high intensity) sweetener(s) such as stevia and aspartame is based on their sucrose equivalent value.

According to a preferred embodiment, said functionalized grains comprise at least two functional ingredients. Preferably the first functional ingredient is a salt preferably NaCl or KCI, and the second functional ingredient is a sugar or a sweetener, preferably glucose, fructose, aspartame, sucrose, stevia and/or other synthetic or natural sweeteners. Preferably said sugar and salt are both present in said functionalized grains at concentrations of at least 5 wt%, at least 7.5 wt%, at least 10 wt%, at least 12 wt%, at least 14 wt%, at least 15 wt%, at least 17.5 wt%, at least 20 wt%, at least 25 wt% or at least 30 wt%.

More preferably at least 3, 4, 5, 6 or 7 functional ingredients are present the total amount of functional ingredients are present in said functionalized grains. Preferably the total concentration is of at least 10 wt%, at least 15 wt%, at least 20 wt%, at least 24 wt%, at least 28 wt%, at least 30 wt%, at least 35 wt%, at least 40 wt%, at least 50 wt% or at least 60 wt%.

The inventors have surprisingly found that functionalized grains, when used in different food products, have an unusual boosting effect regarding their functionality. If salt was used as functional ingredient, it was surprisingly found that as much as 50% of the normal salt dose could be reduced to get the same perception in the product (for example in bread). The same effects are experienced with sweet components like glucose and fructose but also if any other natural or synthetic sweetener is used as functional ingredient.

The functional ingredients are chosen based on the function that needs to be added to the bakery product. The use of salt and/or sugar as functional ingredients allows reducing the overall amount of salt and/or sugar in the bakery product while still maintaining an identical salty and/or sweet sense in the bakery product, thereby improving the health properties off the bakery product. The use of aromas, flavors, aromatic or flavor improvement compounds typically allows the retention of the flavors until the moment that the bakery product is consumed (e.g. reduction of the loss of the flavor during baking and/or storage). The use of colorants typically improves the visibility of the grains in the final product.

It has also been observed that the use of functionalized grains allows the protection of external components or even living micro-organisms against the functional ingredient. More particularly, it is commonly known that yeast will decrease in fermentation activity and gassing powder by being inactivated by components like iron, sugar, salt, acids, some flavoring components (e.g. phenylethanol) and other known inactivating components. The invention makes it unnecessary to use specific adapted yeast which is not always constant in quality and more expensive. Besides the yeast being protected against the functional ingredients, the functional ingredients are also protected against the outer components. One example is the protection of diacetyl, a flavor component, against yeast. Diacetyl is a compound which is metabolized by yeast and cannot be added to the batter or dough product without being taken up by yeast. By using diacetyl as functional ingredient, metabolization by yeast is avoided and diacetyl maintains its function in the bakery product.

Also, gas producing components such as bicarbonate are known for their use in baking powders. The bicarbonate will immediately act when present in and when baking the dough. However, by using gas producing components such as bicarbonate as functional ingredient, the grain protects them against external activators of the reaction like acids etc. The use of gas producing components such as bicarbonate as functional ingredient allows it to maintain its functionality in the final bakery product, thereby maintaining a gas production in the bakery product and allowing the replacement for the slow release of CO₂ of fermenting yeast by a slow release of the gas producing components in the matrix and there coming into contact with the activators to produce gas.

Also, the functionalized grains have the capacity to retain the functional ingredients, especially volatile and reactive flavourings during fermentation, manipulation, incubation and baking. Also the gelatinized inner starch and the proteins may interact and retain those flavouring components. More particularly grains with amylose rich starches may have better retention capacities.

Also, the functionalized grains have the capacity to allow the slow release of enzymes or instant acting components needed in different matrixes like dough or patisserie products. This is especially the case where the activity had to be expressed in a later stadium of the matrix evolution (e.g. dough or batter).

Also, when food grade microorganisms are incorporated in the grain, those functional grains have i.a. the property of acting as starter(s) in dough and/or sourdough preparations, of releasing by fermentation flavors or acid-like taste, and/or of creating specific crumb structure by local gas production.

A further particular embodiment relates to a dough or batter product containing functionalized grains according to the invention, wherein said grains are one or more grain types chosen from wheat, buckwheat, barley, oat, spelt, rye, sorghum, maize, triticale, millet, teff, sunflower, sesame, linseed, amaranth, flaxseed, pumpkin, rapeseed soybean, farro, kamut, quinoa, beans, peas, chick peas, cocoa beans and/or rice. Other starch-rich grains or seeds are also advantageously used in the present invention. Examples are nuts (cashews, almonds, hazelnuts, peanuts) or (extruded) starch granules. Other grain particulates are also advantageously used in the present invention. Examples are pearled grains, (partially) dehulled grains, maize grits, kibbled rye, barley, soy, wheat, oats and the like. Preferably, the grains are chosen among the group of wheat, barley, rye, sorghum, sesame, millet, spelt, teff, maize, sunflower and/or rice. More preferred grains are wheat, barley, rye, sorghum, sesame and sunflower. Even more preferred grains are wheat, rye or barley.

In a further particular embodiment the present invention relates to a dough or batter product according to the invention, wherein said dough or batter product comprises a mixture of functionalized and non-functionalized grains. By dosing a mixture of functionalized and non-functionalized grains into the dough or batter product the amount of functional ingredients in the dough or batter product can be controlled accurately. Also the distribution of the functional ingredients throughout the dough or batter product can be controlled accurately.

It is another aim of the present invention to provide a method to optimally impregnate grains regarding the target concentration of the functional ingredient (or ingredients) in concurrence with the application and the type of the grain.

The functionalized grains used in the context of the present invention are advantageously obtained by performing the steps of:
- soaking the grains in an aqueous solution;
- impregnating the grains with one or more functional ingredients.

It was surprisingly observed that the impregnation of grains was particularly improved if the grains were prepared by first soaking the grains. It was also surprisingly found that the impregnation was significantly improved when the soaking was executed in water without the functional ingredient being present.

Accordingly the method of impregnating the grains advantageously comprises the steps of:
- soaking the grains in an aqueous solution not containing the functional ingredient(s);
- separating said grains from said aqueous solution;
- impregnating the grains with one or more functional ingredients.

Preferably the impregnation of the functional ingredients is based on pressure related techniques.

Accordingly the method of impregnating the grains advantageously comprises the steps of:
a) soaking grains in an aqueous solution not containing the functional ingredient(s);
b) separating said grains from said aqueous solution;
c) resuspending said grains in a liquid functionalization solution comprising one or more functional ingredients under a vacuum of less than 200 mbar;
d) releasing said vacuum;
e) maintaining said grains submerged in said liquid functionalization solution, thereby functionalizing said grains; and;
f) optionally separating said functionalized grains from said liquid functionalization solution and optionally drying said functionalized grains.

In a preferred embodiment the step c) is performed by first applying a vacuum of less than 200 mbar to the grains and then resuspending said grains in a liquid functionalization solution comprising one or more functional ingredients.

The present invention makes use of all possible grains, seeds or beans as natural barrier. Non-limiting examples are: wheat, buckwheat, barley, oat, spelt, rye, sorghum, maize, triticale, millet, teff, sunflower, sesame, linseed, amaranth, flaxseed, pumpkin, rapeseed soybean, farro, kamut, quinoa, beans, peas, chick peas, cocoa beans and/or rice. Preferably, the grains are chosen among the group of wheat, barley, rye, sunflower, teff, spelt, sesame, millet, sorghum, linseed, triticale, oat, rice, maize and/or soybean Preferably, the grains are chosen among the group of wheat, barley, rye, sorghum, sesame, millet, spelt, teff, maize, sunflower and/or rice. More preferred grains are wheat, barley, rye, sorghum, sesame and sunflower. Even more preferred grains are wheat, rye or barley.

The preparing of the grains comprises the step of soaking grains in an aqueous solution. Optionally, said aqueous solution is an acidified aqueous solution, preferably comprising food grade acids or acids formed by fermentation such as for instance acetic acid or lactic acid.

Preferably the soaking step allows obtaining grains with an increased volume, compared to untreated grains having a dry matter content between 95% and 99%. More preferably the dry matter of the drained soaked grains is between about 15% (w/w) and about 80% (w/w). Even more preferably the dry matter of the drained soaked grains is between 25% (w/w) and about 75% (w/w). Still more preferably the dry matter of the drained soaked grains is between 30% (w/w) and about 70% (w/w). Still more preferably the dry matter of the drained soaked grains is between 35% (w/w) and about 70% (w/w).

In another embodiment after soaking the aqueous soaking solution comprises the dry matter in an amount lower than about 10% when the grains are soaked in four times their weight, preferably lower than about 5%; more preferably lower than 4%, even more preferably lower than 3%. More preferably, the dry matter of the aqueous soaking solution ranges between 0.5% and 10%, preferably between 0.5% and 5%; more preferably between 1% and 4%, even more preferably between 1% and 3%.

In a preferred embodiment, the soaking step allows to obtain soaked grains with a dry matter between about 15% (w/w) and about 80% (w/w), preferably between about 25% (w/w) and about 75% (w/w), more preferably between about 30% (w/w) and about 70% (w/w), even more preferably between about 35% (w/w) and about 70% (w/w) and a dry matter of the aqueous soaking solution lower than about 10% when the grains are soaked in four times their weight, preferably lower than about 5%; more preferably lower than 4%, even more preferably lower than 3%.

The soaking depends on different parameters such as, but not limited to, the type of grain, the optional combination with acids and the use of other hull damaging methods or components. For example, usually small grains do not require a soaking at elevated temperatures.

As example, the step of soaking the grains may be performed for about 5 to about 24 hours at temperatures, between 10 and 60 °C. A soaking step can also be performed for about 5 to about 120 minutes at a temperature between about 80°C and about 100 °C.

The skilled artisan will easily find the right combination between the duration of the soaking and the temperature at which it should be conducted.

Additionally some techniques can optionally be used to facilitate impregnation of the grains with the functional ingredient(s). This may be done by damaging the hull using techniques known in the art such as freezing, physical treatments, enzymatic treatments, etc. Examples of techniques are freeze/thaw techniques, friction with rough surfaces, treatment with glucanases and/or cellulases, etc.

Impregnation can be easily improved in certain cases by adding acids in the soaking step. Preferred acids are organic acids. Preferred organic acids are lactic acid and acetic acid. Advantageously the organic acids may be provided by a sourdough fermentation of lactic acid bacteria and/or acetic acid bacteria. In a preferred embodiment the concentration of the organic acid(s) is between about 0.1N and about 1N.

Once the grains prepared for impregnation, the grains are separated from the aqueous solution by techniques known in the art. Examples of techniques are decantation, filtration, centrifugation, etc.

Optionally the functional ingredients can be added to the grain aqueous solution without separation step.

In a preferred embodiment the soaking step is followed by a step (c) wherein the soaked grains are submitted to a vacuum of 200 mbar or less, preferably 150 mbar or less, preferably 100 mbar or less, preferably 80 mbar or less, more preferably 45 mbar or less, more preferably 20 mbar or less. Upon reaching the vacuum equilibrium between the inner grain and outer grain area, the grains are submitted to a functionalization solution comprising one or more functional ingredients, while still maintaining the vacuum condition.

Preferably a vacuum of 200 mbar or less is first maintained for about 1 to about 30 minutes and subsequently the grains are submitted to the functionalization solution for about 20 to about 240 minutes, more preferably a vacuum of 100 mbar or less is first maintained for about 1 to about 25 minutes and subsequently the grains are submitted to the functionalization solution for about 20 to about 210 minutes, more preferably a vacuum of 80 mbar or less is first maintained for about 1 to about 20 minutes and subsequently the grains are submitted to the functionalization solution for about 20 to about 180 minutes, more preferably a vacuum of 45 mbar or less is first maintained for about 1 to about 20 minutes and subsequently the grains are submitted to the functionalization solution for about 20 to about 120 minutes, more preferably a vacuum of 20 mbar or less is first maintained for about 1 to about 5 minutes and subsequently the grains are submitted to the functionalization solution for about 20 to about 120 minutes. The functionalization solution typically comprises a concentration between 10 and 100 % of the functional ingredient, depending on the solubility. Examples of concentration are 30% for NaCl and 40% for glucose. Preferably, the vacuum treatment is performed at a temperature between 10 and 80 °C depending of the functional ingredient, preferably between 10 and 60 °C, more preferably between 15 and 45 °C, more preferably at about 20 °C.

After totally submerging the grains in functionalization solution, the vacuum is released till atmospheric pressure and the grains are maintained submerged till equilibrium, preferably for at least 1 hours, between the impregnated grain and the outer solution is obtained. Optionally it is possible to continue the impregnation process by applying overpressure till high pressures (up to 1000 bar or more).

In a further particular embodiment, the present invention relates to a method to impregnate grains comprising the following steps:
a) soaking grains in an aqueous solution until the dry matter of the aqueous soaking solution is lower than about 10% when the grains are soaked in four times their weight, preferably lower than about 5%; more preferably lower than 4%, even more preferably lower than 3%. In a preferred embodiment, the soaking step allows to obtain soaked grains with a dry matter between about 15% (w/w) and about 80% (w/w), preferably between about 25% (w/w) and about 75% (w/w), more preferably between about 30% (w/w) and about 70% (w/w), even more preferably between about 35% (w/w) and about 70% (w/w) and until the dry matter of the aqueous soaking solution lower than about 10% when the grains are soaked in four times their weight, preferably lower than about 5%; more preferably lower than 4%, even more preferably lower than 3%. ;
b) separating said grains from said aqueous solution;
c) applying a vacuum of less than 200 mbar, preferably 80 mbar or less, more preferably 45 mbar or less, more preferably 20 mbar or less; and resuspending said grains in a liquid functionalization solution comprising one or more functional ingredients;
d) releasing said vacuum;
e) maintaining said grains submerged in said liquid functionalization solution, thereby functionalizing said grains for 20 to 120 minutes at 15 to 45°C; and;
f) separating said functionalized grains from said liquid functionalization solution and optionally drying said functionalized grains;

In a further embodiment, the present invention provides in a method for obtaining functionalized grains further comprising one or more steps chosen from the group of:
- adding other additional components to the grains after the step of functionalization;
- adding stabilizers after the functionalization step;
- packing said grains in all kind of packaging under the form of a liquid, a paste or a dried product.

Additional components may be chosen among living cells like yeasts, lactic acid bacteria (LAB) or acetic acid bacteria (AAB) in all possible forms (dried, liquid coated, ...), salts, vitamins, sugars such as sucrose, proteins sources such as protein hydrolyzates , yeast extracts, improvers, enzymes or all kind of food grade ingredients.

After separating the functionalized grains from the liquid (aqueous) functionalization solution and optionally drying the functionalized grains, the functionalized grains are advantageously incorporated into a dough or batter, preferably in an amount of at least 1 wt% of said functionalized grains, more particularly at least 1.5 wt%, at least 2 wt%, at least 2.5 wt%, at least 3 wt%, at least 3.5 wt% or at least 4 wt% of said functionalized grains (percentage calculated as dry matter of the functionalized grains/total dough or batter weight). The amount of grains added to the dough or batter product highly depends on the type of grains used and the desired concentration of the functional ingredient(s) in the functionalized grains.

Yet another embodiment according to the invention relates to a method for obtaining a dough or batter product for use in bakery products comprising the steps of:
a) soaking grains in an aqueous solution;
b) separating said grains from said aqueous solution;
c) resuspending said grains in a liquid functionalization solution comprising one or more functional ingredients under a vacuum of less than 200 mbar;
d) releasing said vacuum;
e) maintaining said grains submerged in said liquid functionalization solution, thereby functionalizing said grains;
f) optionally separating said functionalized grains from said liquid functionalization solution and optionally drying said functionalized grains; and;
g) incorporating into a dough or batter said functionalized grains.

In a preferred embodiment the step c) is performed by first applying a vacuum of less than 200 mbar to the grains and then resuspending said grains in a liquid functionalization solution comprising one or more functional ingredients.

In a further particular embodiment, the present invention relates to a method for the production of a dough according to the present invention, wherein the total amount of functional ingredients in said functionalized grains are at least 40 wt% of the total amount of said functional ingredients in said dough or batter product. More preferably, the total amount of functional ingredients in said grains are at least 45 wt%, 47.5 wt%, 50 wt%, 52.5 wt%, 55 wt%, 60 wt%, 65 wt%, 70 wt%, 75 wt%, 80 wt%, 85 wt%, 90 wt%, 95 wt% of the total amount of said functional ingredients in said dough or batter product, even up to 100 wt%. More particularly, the total amount of functional ingredients in said grains are between 40 wt% and 95 wt% of the total amount of said functional ingredients in said dough or batter product. More preferably, the total amount of functional ingredients in said grains are between 45 wt% and 85 wt% of the total amount of said functional ingredients in said dough or batter product. More preferably, the total amount of functional ingredients in said grains are between 50 wt% and 80 wt% of the total amount of said functional ingredients in said dough or batter product. More preferably, the total amount of functional ingredients in said grains are between 50 wt% and 75 wt% of the total amount of said functional ingredients in said dough or batter product.

In a further particular embodiment, the present invention relates to a method for the production of a dough according to the present invention, wherein said functional ingredients are typical food-grade ingredients preferably one or more food-grade ingredients chosen from salty or salty-like ingredients, sweeteners, ethanol, baking powder(s), diacetyl, natural or synthetic aromas compounds, flavors and/or flavor improvement compounds, enzymes (amylases, xylanases, lipases, oxidases, lipoxigenases, proteases,...), oxidizing or reducing agents, emulsifiers, polyols, gums, fats, oils, fatty materials, organic acids, vitamins, antimicrobial agents, coloring agents, food grade microorganisms, ... More preferably said functional ingredient is salt, even more preferably NaCl. Alternatively, said functional ingredient is a sweetener, preferably a sweetener chosen from glucose, fructose, aspartame, sucrose, stevia and/or other synthetic or natural sweeteners. In a particular embodiment, said functional ingredients are salt and sugar.

Dry/solid form may be obtained by subjecting the wet functionalized grains composition to a drying step such a fluidization, ring drying, drum drying and all drying methods not harming the structure of the grain and/or his functionality. Preferred dry matter of the dried functionalized grains composition is more than 50% preferably more than 70%, preferably more than 80%, more preferably more than 92% as defined above.

In a further particular embodiment, the present invention relates to a method for the production of a bakery product, comprising the step of obtaining a dough or batter product according to the present invention and further comprising the step of baking said dough or batter comprising said functionalized grains, thereby obtaining a bakery product comprising said functionalized grains.

More particularly, said bakery product is a bakery or patisserie product known in the art, such as for instance those selected from the group comprising bread, soft rolls, bagels, donuts, Danish pastry, hamburger rolls, pizza, pita bread, ciabatta, cake, baguettes, rolls, crackers, biscuits, cookies, pie crusts, rusks and other baked products, and preferably cake, baguettes, hamburger rolls, sweet dough breads and lean dough breads. More preferably the present invention refers to any types of bread products known in the art.

A baked product according to the present invention comprises an unleavened, a yeast-leavened or a chemically leavened baked product, the major ingredient of which is flour derived from cereal grains. The baked product of the invention may also contain fat or fat replacer, sugar, eggs, gluten, starch, hydrocolloids, enzymes, emulsifiers, oxidizing or reducing compounds, prebiotics compounds and/or an improver. Examples of baked products are bakery products and patisserie products.

In yet another embodiment according to the invention relates to a bakery product obtained according to the methods according to the invention, prepared by baking a dough or batter product according to the present invention.

The invention will be described in the following non-limiting examples.

### EXAMPLES

### Example 1: grain functionalization with salt: influence of vacuum and soaking

50 g of wheat kernels (containing 0.1% NaCl on dry weight) were soaked overnight at 40°C in 200 g tap water or in a 30 % saturated salt solution (NaCI). Afterwards the wheat grains were separated from water or saturated salt solution by a sieve and suspended in 200 g of a 30% (w/w) saturated salt solution (NaCI) at 37°C. The suspension was brought at an underpressure of 75 mbar for 30 minutes totally submerged. The grains were floating in the beginning, indicating there was free space available at the inside but after a while were totally submerged in the 30% salt solution. Once the vacuum released till atmospheric pressure, they stayed submerged at this stage for 5 minutes.

Afterwards the grains were separated from the salt solution and washed. The remaining interstitial water was removed by placing the grains at 50°C for 24 hours.

NaCl concentration in the grains was measured by potentiometric titration with silver nitrate using a Titrino plus 848 (Metrohm Ltd). Dry matters (DM) of the grains and of the soaking solution after functionalization were measured by drying at 105 °C overnight.

**Table 1 shows the influence of impregnation by vacuum and the importance of presoaking conditions.**

| sample | Soaked grains DM (wt%) | Soaking solution DM (wt%) | Salt concentration in dried grains (wt%) |
|---|---|---|---|
| Presoaking in salt solution | 64.3 | - | 2.6 |
| Presoaking in tap water | 55.21 | 0.29 | 5.7 |

### Example 2: grain functionalization with salt: influence of submerging time

50 g of wheat or rye kernels were soaked overnight at 40°C in 200 g tap water. Then after 1 h at about 95°C, the wheat grains were separated from water by a sieve and suspended in 200 g of a 30% (w/w) saturated salt solution (NaCI). The suspension, once at 37°C, was brought at an underpressure of 75 mbar for 5, 30 and 60 minutes totally submerged. Once the vacuum released till atmospheric pressure, they stayed submerged for 30 minutes.

Afterwards the grains were separated from the salt solution and washed. The remaining interstitial water was removed by placing the grains at 50°C for 24 hours.

NaCl concentration in the grains and dry matter (DM) were measured as in example 1.

**Table 2: soaked grains dry matter (after sieving) and functionalized grains salt concentration.**

| | Wheat kernels | | Rye kernels | |
|---|---|---|---|---|
| Submerging time | Soaked grains DM (wt%) | Salt concentration in dried grains (wt%) | Soaked grains DM (wt%) | Salt concentration in dried grains (wt%) |
| 5 min | 44.1 | 6.3 | 37.0 | 5.8 |
| 30 min | 40.8 | 11.5 | 36.0 | 12 |
| 60 min | 41.2 | 20.3 | | |

### Example 3: grain functionalization with salt: influence of soaking conditions.

### Test A and Abis (according to the invention)

250g wheat (test A) or rye (test Abis) kernels were added to 1 liter water. The grains were soaked at 100°C for 40 minutes in a vessel equipped with a reflux column. After soaking the water was separated, and the grains were further drained under vacuum at 25 mbar for 1 minute. Afterwards, a 30% (w/w) saturated salt solution (NaCI) was added into the vessel containing the grains, keeping the vacuum for 5 minutes. Once the vacuum slowly released till atmospheric pressure, the grains were kept submerged at this stage for 120 minutes. Afterwards the grains were separated from the salt solution and washed. The remaining interstitial water in Test A was removed by placing the grains at 50°C for 24 hours. Soaked grains of Test Abis were kept as such without drying step.

### Test B (not according to the invention)

250g wheat kernels were added to a 30% (w/w) salt solution (NaCl). The wheat grains were soaked at 100°C for 60 minutes in a vessel equipped with a reflux column. After cooling a 25 mbar vacuum was applied to the grains suspension for 5 minutes. Once the vacuum slowly released till atmospheric pressure, the grains were kept submerged at this stage for 120 minutes. Afterwards the grains were separated from the salt solution and washed. The remaining interstitial water was removed by placing the grains at 50°C for 24 hours.

Salt concentration and dry matter determinations were performed as in the previous examples.

**Table 3 shows the influence of the presoaking conditions**

| test | Soaked grains DM (%) | Soaking solution DM (wt%) | Functionalized grains DM (wt%) | Salt concentration in dried grains (wt%) |
|---|---|---|---|---|
| A (wheat, soaking in water) | 44.3 | 0.62 | 95.92 | 14.7 |
| Abis (rye, soaking in water) | 40.7 | 0.94 | 65.54 | 11.7 |
| B (wheat, soaking in NaCl) | - | | 98.91 | 4.8 |

### Example 4: Various grains functionalization with salt and glucose.

15 grams of different grains or seeds were soaked at 40°C for 16 h in 100 ml tap water. After separation of the water, the grains were put at 42 mbar for 5 minutes in 100 ml of a 30 % (w/w) salt solution (NaCI) or in 100 ml of a 40 % (w/w) glucose solution without loss of vacuum. After pressure release the grains remained soaked for 120 min, and then were separated from the solution by filtration.

Salt concentration and dry matter were determined as in the preceding examples. Glucose concentration in the grains was determined by pulsed amperometric detection using a PA1 column (4x250 mm) on a Dionex ICS 3000.

**Table 4: functionalized grains properties**

| Type grain | Soaked grains DM (%) | Glucose concentration in dried grains (wt%) | Salt concentration in dried grains (wt%) |
|---|---|---|---|
| Quinoa | 46.7 | 17.3, | 25.0 |
| Buckwheat | 52.1 | 9.3 | 20.9 |
| Barley | 51.4 | 18.8 | 20.6 |
| Sunflower | 60.9 | 12.2 | 17.6 |
| Amaranth | 48.4 | 13.3 | 16.9 |
| Millet | 67.5 | 12.4 | 15.0 |
| Oats | 56.4 | 11.5 | 14.0 |
| Spelt | 57.0 | 7.5 | 12.3 |
| Sorghum | 58.5 | 10.9 | 12.1 |
| Rye | 40.6 | 9.9 | 12.1 |
| Kamut | 55.7 | 6.8 | 11.9 |
| rice | 71.3 | 9.4 | 10.6 |
| wheat | 57.4 | 6.5 | 8.4 |
| corn | 65.6 | 3.1 | 6.7 |

### Example 5: doughs and breads with functionalized grains: wheat, rye

The functionalized grains of example 3 (tests A & Abis) were used to prepare pan wheat breads. The composition of the bread doughs is shown in table 5.

**Table 5: doughs compositions**

| Ingredient (g) | 1 | 2 | 3 | 4 |
|---|---|---|---|---|
| Wheat flour (DUO - Ceres, Belgium) | 1500 | 1500 | 1500 | 1500 |
| Water (adjusted for kernels dry weight) | 870 | 885 | 855 | 885 |
| Fresh yeast | 45 | 45 | 45 | 45 |
| Salt | 30 | 6 | 6 | 0 |
| S-500 Controller (Puratos, Belgium)** | 30 | 30 | 30 | 30 |
| Regular wheat kernels | 225 | | | |
| Wheat kernels (test A example 3)* | | 112 | 61 | |
| Rye kernels (test Abis example 3)* | | | | 196 |

| | | | | |
|---|---|---|---|---|
| ** S-500 controller is a regular bread improver that contains as main ingredients enzymes (alpha-amylase, xylanase), ascorbic acid and emulsifiers. | | | | |

The ingredients (table 5) were mixed for 1.5 min at low speed and 6 min at high speed in a dough mixer (Diosna SP24). Temperature in the bakery was about 25°C. Dough temperature was about 26°C. After a bulk fermentation for 30 min the dough was divided in 600 g pieces and submitted to an intermediate proofing step of 20 min at 25°C.

A final proofing step of the individuals doughs, placed in molds, was performed in a Koma fermentation room (60 min, 35°C, 95% relative humidity) before baking at 230°C for 35 min with steam in a Miwe Roll Inn oven.

The breads were evaluated the day after baking by an expert panel of about 8 persons trained to identify and describe aromas and tastes. The taste of the breads made with either 25% or 50% less salt were judged by the experts as having the same taste as the reference where 100% of the salt was added to the dough.

**Table 6: characteristics of the doughs/breads**

| | 1 | 2 | 3 | 4 |
|---|---|---|---|---|
| % of salt in dough | 1.11% | 0.85% | 0.58% | 0.57% |
| % of total salt present in the functional grains | 0.8 % | 72.5% | 58.9% | 100 % |
| % of functional grains (DM) in dough | 8.2 | 4.1 | 2.3 | 4.8 |
| Taste perception of the bread by the panel | Tasty bread | Same as reference | Same as reference | slightly less tasty as reference |

### Example 6: doughs and breads with functionalized grains: sunflower, barley. wheat

250g of sunflower seeds, pearled barley grains or wheat kernels were added to 1 liter water and overnight soaked at 40°C. After one hour at about 100°C in a vessel equipped with a reflux column, the water was removed, and the grains were further drained under vacuum at 25 mbar for 1 minute. Afterwards, a 30% (w/w) saturated salt solution was added into the underpressurized vessel containing the grains or seed, and left under partial vacuum for 5 minutes. Once the vacuum slowly released till atmospheric pressure, the grains were kept submerged at this stage for 120 minutes. Afterwards the grains were separated from the salt solution and washed. The remaining interstitial water was removed by placing the grains at 50°C for 24 hours.

Salt concentration and dry matter determinations were performed as in the previous examples.

**Table 7 shows the properties of the functionalized grains**

| grains | Soaked grains DM (%) | Soaking solution DM (wt%) | Functionalized grains DM (wt%) | Salt concentration in dried grains (wt%) |
|---|---|---|---|---|
| Sunflower seeds | 65.5 | 0.3 | 97.8 | 19.3 |
| Pearl barley | 31.7 | | 89.9 | 37.0 |
| Wheat grain | 48.5 | 0.20 | 93.0 | 17.2 |

Those impregnated grains or seeds were used to prepare pan wheat breads. The composition of the bread doughs are shown in table 8

**Table 8 : doughs compositions**

| Ingredient (g) | 5 | 6 | 7 | 8 |
|---|---|---|---|---|
| Wheat flour (DUO - Ceres, Belgium) | 1500 | 1500 | 1500 | 1500 |
| Water (adjusted for kernels dry weight) | 855 | 852 | 849 | 847 |
| Fresh yeast | 45 | 45 | 45 | 45 |
| Salt | 30 | 6 | 6 | 6 |
| S-500 Controller (Puratos, Belgium)** | 45 | 45 | 45 | 45 |
| regular wheat kernels | 130 | | | |
| functionalized sunflowers seeds | | 125 | | |
| functionalized pearled barley grains | | | 65 | |
| functionalized wheat grains | | | | 140 |

| | | | | |
|---|---|---|---|---|
| ** S-500 controller is a regular bread improver that contains as main ingredients enzymes (alpha-amylase, xylanase), ascorbic acid and emulsifiers. | | | | |

Doughs and breads were prepared and evaluated as in example 6.

**Table 9: characteristics of the dough's/breads**

| | 5 | 6 | 7 | 8 |
|---|---|---|---|---|
| % of salt in dough | 1.11 | 1.15 | 1.10 | 1.10 |
| % of total salt present in the functional grains | 0.5 | 79.7 | 78.3 | 78.8 |
| % of functional grains (DM) in dough | 4.9 | 4.8 | 2.3 | 5.1 |
| Taste perception of the bread by the panel | Tasty bread | More intense than reference | Most intense of the series | much more intense then reference |

### Example 7: grain functionalization with sweeteners or coloring agent.

### Test A : rebaudioside A

300g rye kernels were added to 1.2 liter water. The grains were soaked at 100°C for 40 minutes in a vessel equipped with a reflux column. After soaking the water was separated, and the grains were further drained under vacuum at 25 mbar for 1 minute. Afterwards, a 1% (w/w) solution of rebaudioside A (97%), a purified Stevia component (Winhill Bioscience Shanghai Inc.), was added at room temperature into the vessel containing the grains, keeping the vacuum for 5 minutes. Once the vacuum slowly released till atmospheric pressure, the grains were kept submerged at this stage for 60 minutes. Afterwards the grains were separated from the solution and washed. The remaining interstitial water was removed by placing the grains at 50°C for 24 hours.

### Test B : fructose

300g rye kernels were added to 1.2 liter water. The grains were soaked at 100°C for 40 minutes in a vessel equipped with a reflux column. After soaking the water was separated, and the grains were further drained under vacuum at 25 mbar for 1 minute. Afterwards, a 50% (w/w) fructose solution at 50°C, was added into the vessel containing the grains, keeping the vacuum for 5 minutes. Once the vacuum slowly released till atmospheric pressure, the grains were kept submerged at this stage for 120 minutes. Afterwards the grains were separated from the solution and washed. The remaining interstitial water was removed by placing the grains at 50°C for 24 hours. The fructose was quantified by a DIONEX analysis method (example 4).

### Test C : dark malt extract

300g rye kernels were added to 1.2 liter water. The grains were soaked at 100°C for 40 minutes in a vessel equipped with a reflux column. After soaking the water was separated, and the grains were further drained under vacuum at 25 mbar for 1 minute. Afterwards, a 25% (w/w) solution of dark malt extract (Imperial Malts Ltd., India) at 50°C, was added into the vessel containing the grains, keeping the vacuum for 5 minutes. Once the vacuum slowly released till atmospheric pressure, the grains were kept submerged at this stage for 60 minutes. Afterwards the grains were separated from the solution and washed. The remaining interstitial water was removed by placing the grains at 50°C for 24 hours.

Dry matter determination was performed as in the previous examples.

**Table 10 grains characteristics**

| | Soaked grains DM (%) | Functionalized grains DM (wt%) | Fructose in grain DM (wt%) |
|---|---|---|---|
| reference | 44.5 | 94.0 | 0.0 |
| A (rebaudioside A) | 44.3 | 93.8 | - |
| B (fructose) | 44.1 | 93.3 | 18.6 |
| C (dark malt extract) | 45.6 | 94.8 | - |

### Example 8: doughs and breads with functionalized rye kernels.

The functionalized grains of example 7 (tests A & B & C) were used to prepare pan wheat breads. The composition of the bread doughs is shown in table 7.

Reference rye kernels are kernels as in test A but without functional ingredient added during the process.

**Table 11: doughs compositions**

| | Test | | | | | |
|---|---|---|---|---|---|---|
| Ingredient (g) | Aref | A | Bref | B | Cref | C |
| Wheat flour (DUO - Ceres, Belgium) | 1500 | 1500 | 1500 | 1500 | 1500 | 1500 |
| Water (adjusted for kernels dry weight) | 900 | 900 | 900 | 900 | 900 | 900 |
| Fresh yeast | 75 | 75 | 75 | 75 | 75 | 75 |
| Salt | 30 | 30 | 30 | 30 | 30 | 30 |
| S-500 Controller (Puratos, Belgium)* | 30 | 30 | 30 | 30 | 30 | 30 |
| Reference rye kernels | 300 | | 300 | | 300 | |
| Rye kernels of test A | | 300 | | | | |
| rebaudioside A** | 1.12 | | | | | |
| Rye kernels of test B | | | | 300 | | |
| Fructose*** | | | 52 | | | |
| Rye kernels of test C | | | | | | 300 |

| | | | | | | |
|---|---|---|---|---|---|---|
| * S-500 controller is a regular bread improver that contains as main ingredients enzymes (alpha-amylase, xylanase), ascorbic acid and emulsifiers. ** and *** :amount of ingredient is the same amount as the amount added with the grains in test A and B respectively. | | | | | | |

The ingredients (table 11) were mixed for 1.5 min at low speed and 6 min at high speed in a dough mixer (Diosna SP24). Temperature in the bakery was about 25°C. Dough temperature was about 26°C. After a bulk fermentation for 30 min the dough was divided in 600 g pieces and submitted to an intermediate proofing step of 20 min at 25°C.

A final proofing step of the individuals doughs, placed in molds, was performed in a Koma fermentation room (60 min, 35°C, 95% relative humidity) before baking at 230°C for 35 min with steam in a Miwe Roll Inn oven.

The breads were evaluated the day after baking by an expert panel of about 8 persons trained to identify and describe tastes and visual perception of the breads.

The breads made with grains functionalized either with the sweetener Rebaudioside A (test A) or fructose (test B) were judged by the experts as having a sweeter taste than their respective control (Aref and Bref). The appearance of slices of breads made with the kernels functionalized with the dark malt extract (Figure 1B) was that they showed very pronounced dark grain spots compared to the light grey grain spots of the control bread (Figure 1A) (figure 1).

## Claims

1. A dough or batter product for use in bakery products, characterized therein that said dough or batter product comprises functionalized grains wherein the total amount of functional ingredients in said grains are at least 40 wt% of the total amount of said functional ingredients in said dough or batter product.

2. Dough or batter product according to claim 1, wherein said dough or batter product comprises at least 1 wt% of said functionalized grains.

3. Dough or batter product according to claim 1 or 2, wherein said functional ingredients are one or more ingredients chosen from salty or salty-like ingredients, sugars or sweeteners, ethanol, baking powder(s), diacetyl, natural or synthetic aromas compounds, flavors and/or flavor improvement compounds, enzymes, oxidizing or reducing agents, emulsifiers, polyols, gums, fats, oils, fatty materials, organic acids, vitamins, antimicrobial agents, coloring agents and/or food-grade microorganisms.

4. Dough or batter product according to any of claims 1 to 3, wherein said grains are one or more grain types chosen from wheat, buckwheat, barley, oat, spelt, rye, sorghum, maize, triticale, millet, teff, sunflower, sesame, linseed, amaranth, flaxseed, pumpkin, rapeseed soybean, farro, kamut, quinoa, beans, peas, chick peas, nuts and/or rice.

5. Dough or batter product according to any of claims 1 to 4, wherein said dough or batter product comprises a mixture of functionalized and non-functionalized grains.

6. Method for impregnating grains comprising the steps of:
a) soaking grains in an aqueous solution;
b) separating said grains from said aqueous solution;
c) resuspending said grains in a liquid functionalization solution comprising one or more functional ingredients under a vacuum of less than 200 mbar;
d) releasing said vacuum;
e) maintaining said grains submerged in said liquid functionalization solution, thereby functionalizing said grains; and;
f) optionally separating said functionalized grains from said liquid functionalization solution and optionally drying said functionalized grains.

7. Method for obtaining a dough or batter product for use in bakery products, comprising the steps according to the method of claim 6 and further comprising the step of incorporating into a dough or batter said functionalized grains.

8. Method for the production of a bakery product, comprising the steps according to the method of claim 7 and further comprising the step of baking said dough or batter comprising said functionalized grains, thereby obtaining a bakery product comprising said functionalized grains.

9. Method according to any of claims 6 to 8, wherein the total amount of functional ingredients in said functionalized grains is at least 40wt% of the total amount of said functional ingredients in said dough or batter product.

10. Method according to any of claims 6 to 9, wherein said soaking step allows to obtain soaked grains with a dry matter between about 15% (w/w) and about 80% (w/w) and/or a dry matter of the aqueous soaking solution lower than about 10% when the grains are soaked in four times their weight.

11. Method according to any of claims 6 to 10, wherein said functional ingredients are one or more ingredients chosen from salty or salty-like ingredients, sugars or sweeteners, ethanol, baking powder(s), diacetyl, natural or synthetic aromas compounds, flavors and/or flavor improvement compounds, enzymes, oxidizing or reducing agents, emulsifiers, polyols, gums, fats, oils, fatty materials, organic acids, vitamins, antimicrobial agents, coloring agents and/or food-grade microorganisms.

12. Method according to any of claims 6 to 11, wherein said resuspension according to step c) is maintained for about 1 to about 30 minutes.

13. Method according to any of claims 6 to 12, wherein said liquid functionalization solution comprises between 10 and 100 % of said functional ingredient.

14. Method according to any of claims 7 to 13, wherein at least 1 wt% of said functionalized grains are incorporated into said dough or batter.

15. Bakery product obtained according to the methods of any of claims 8 to 14, prepared by baking a dough or batter product according to any of claims 1 to 5.

## Patentansprüche

1. Teig- oder Backteigprodukt zur Verwendung in Backwaren, **dadurch gekennzeichnet, dass** das Teig- oder Backteigprodukt funktionalisierte Körner umfasst, wobei die Gesamtmenge an funktionellen Inhaltsstoffen in den Körnern wenigstens 40 Gew.-% der Gesamtmenge der funktionellen Inhaltsstoffe in dem Teig- oder Backteigprodukt beträgt.

2. Teig- oder Backteigprodukt gemäß Anspruch 1, wobei das Teig- oder Backteigprodukt wenigstens 1 Gew.-% an den funktionalisierten Körnern umfasst.

3. Teig- oder Backteigprodukt gemäß Anspruch 1 oder 2, wobei die funktionellen Inhaltsstoffe ein oder mehrere Inhaltsstoffe ausgewählt aus salzigen oder salzartigen Inhaltsstoffen, Zuckern oder Süßstoffen, Ethanol, Backpulver(n), Diacetyl, natürlichen oder synthetischen Aromaverbindungen, Aromen und/oder aromaverbessernden Verbindungen, Enzymen, Oxidations- oder Reduktionsmitteln, Emulgatoren, Polyolen, Gummis, Fetten, Ölen, Fettmaterialien, organischen Säuren, Vitaminen, antimikrobiellen Mitteln, Farbstoffen und/oder lebensmittelgeeigneten Mikroorganismen sind.

4. Teig- oder Backteigprodukt gemäß einem der Ansprüche 1 bis 3, wobei die Körner ein oder mehrere Körnertypen ausgewählt aus Weizen, Buchweizen, Gerste, Hafer, Dinkel, Roggen, Sorghum, Mais, Triticale, Hirse, Teff, Sonnenblumen, Sesam, Leinsamen, Amaranth, Flachssamen, Kürbis, Raps, Sojabohnen, Farro, Kamut, Quinoa, Bohnen, Erbsen, Kichererbsen, Nüssen und/oder Reis sind.

5. Teig- oder Backteigprodukt gemäß einem der Ansprüche 1 bis 4, wobei das Teig- oder Backteigprodukt ein Gemisch von funktionalisierten und nichtfunktionalisierten Körnern umfasst.

6. Verfahren zum Imprägnieren von Körnern, umfassend die Schritte:
a) Einweichen von Körnern in einer wässrigen Lösung;
b) Abtrennen der Körner von der wässrigen Lösung;
c) Resuspendieren der Körner in einer flüssigen Funktionalisierungslösung, die einen oder mehrere funktionelle Inhaltsstoffe umfasst, unter einem Unterdruck von unter 200 mbar;
d) Lösen des Unterdrucks;
e) eingetaucht belassen der Körner in der flüssigen Funktionalisierungslösung, um die Körner zu funktionalisieren; und
f) gegebenenfalls Abtrennen der funktionalisierten Körner von der flüssigen Funktionalisierungslösung und gegebenenfalls Trocknen der funktionalisierten Körner.

7. Verfahren zum Herstellen eines Teig- oder Backteigprodukts zur Verwendung in Backwaren, umfassend die Schritte gemäß dem Verfahren gemäß Anspruch 6 und ferner umfassend den Schritt des Einverleibens der funktionalisierten Körner in einen Teig oder Backteig.

8. Verfahren zum Herstellen einer Backware, umfassend die Schritte gemäß dem Verfahren gemäß Anspruch 7 und ferner umfassend den Schritt des Backens des Teigs oder Backteigs, der die funktionalisierten Körner umfasst, um dadurch eine Backware zu erhalten, die die funktionalisierten Körner umfasst.

9. Verfahren gemäß einem der Ansprüche 6 bis 8, wobei die Gesamtmenge an funktionellen Inhaltsstoffen in den funktionalisierten Körnern wenigstens 40 Gew.-% der Gesamtmenge der funktionellen Inhaltsstoffe in dem Teig- oder Backteigprodukt beträgt.

10. Verfahren gemäß einem der Ansprüche 6 bis 9, wobei der Schritt des Einweichens das Erhalten von eingeweichten Körnern mit einer Trockenmasse zwischen etwa 15 % (Gew./Gew.) und etwa 80 % (Gew./Gew.) und/oder einer Trockenmasse der wässrigen Einweichlösung von unter etwa 10 %, wenn die Körner im Vierfachen ihres Gewichts eingeweicht werden, ermöglicht.

11. Verfahren gemäß einem der Ansprüche 6 bis 10, wobei die funktionellen Inhaltsstoffe ein oder mehrere Inhaltsstoffe ausgewählt aus salzigen oder salzartigen Inhaltsstoffen, Zuckern oder Süßstoffen, Ethanol, Backpulver(n), Diacetyl, natürlichen oder synthetischen Aromaverbindungen, Aromen und/oder aromaverbessernden Verbindungen, Enzymen, Oxidations- oder Reduktionsmitteln, Emulgatoren, Polyolen, Gummis, Fetten, Ölen, Fettmaterialien, organischen Säuren, Vitaminen, antimikrobiellen Mitteln, Farbstoffen und/oder lebensmittelgeeigneten Mikroorganismen sind.

12. Verfahren gemäß einem der Ansprüche 6 bis 11, wobei die Resuspension gemäß Schritt c) etwa 1 bis etwa 30 Minuten gehalten wird.

13. Verfahren gemäß einem der Ansprüche 6 bis 12, wobei die flüssige Funktionalisierungslösung zwischen 10 und 100 % des funktionellen Inhaltsstoffs umfasst.

14. Verfahren gemäß einem der Ansprüche 7 bis 13, wobei wenigstens 1 Gew.-% an den funktionalisierten Körnern in den Teig oder Backteig einverleibt werden.

15. Backware, erhalten gemäß den Verfahren gemäß einem der Ansprüche 8 bis 14, hergestellt durch Backen eines Teig- oder Backteigprodukts gemäß einem der Ansprüche 1 bis 5.

## Revendications

1. Produit de pâte ou de pâte liquide pour une utilisation dans des produits de boulangerie, **caractérisé en ce que** ledit produit de pâte ou de pâte liquide comprend des grains fonctionnalisés où la quantité totale d'ingrédients fonctionnels dans lesdits grains constitue au moins 40% en poids de la quantité totale desdits ingrédients fonctionnels dans ledit produit de pâte ou de pâte liquide.

2. Produit de pâte ou de pâte liquide selon la revendication 1, où ledit produit de pâte ou de pâte liquide comprend au moins 1% en poids desdits grains fonctionnalisés.

3. Produit de pâte ou de pâte liquide selon la revendication 1 ou 2, où lesdits ingrédients fonctionnels sont un ou plusieurs ingrédients choisis parmi les ingrédients salés ou de type salé, les sucres ou les édulcorants, l'éthanol, une ou plusieurs levures chimiques, les composés aromatiques diacétylés, naturels ou synthétiques, les arômes et/ou les composés exhausteurs d'arômes, les enzymes, les agents oxydants ou réducteurs, les émulsifiants, les polyols, les gommes, les matières grasses, les huiles, les matériaux gras, les acides organiques, les vitamines, les agents antimicrobiens, les agents colorants et/ou les microorganismes de qualité alimentaire.

4. Produit de pâte ou de pâte liquide selon l'une quelconque des revendications 1 à 3, où lesdits grains sont constitués d'un ou plusieurs types de grains choisis parmi le blé, le sarrasin, l'orge, l'avoine, l'épeautre, le seigle, le sorgho, le maïs, le triticale, le millet, le tef, le tournesol, le sésame, le lin, l'amarante, la graine de lin, le potiron, le colza, le soja, le farro, le blé Khorasan, le quinoa, les haricots, les poids, les pois chiches, les noix et/ou le riz.

5. Produit de pâte ou de pâte liquide selon l'une quelconque des revendications 1 à 4, où ledit produit de pâte ou de pâte liquide comprend un mélange de grains fonctionnalisés et non fonctionnalisés.

6. Méthode d'imprégnation de grains, comprenant les étapes :
a) de trempage des grains dans une solution aqueuse ;
b) de séparation desdits grains à partir de ladite solution aqueuse ;
c) de remise en suspension desdits grains dans une solution de fonctionnalisation liquide comprenant un ou plusieurs ingrédients fonctionnels sous un vide inférieur à 200 mbars ;
d) de cassage dudit vide ;
e) de maintien desdits grains en submersion dans ladite solution de fonctionnalisation liquide, afin de fonctionnaliser lesdits grains ; et
f) éventuellement, de séparation desdits grains fonctionnalisés à partir de ladite solution de fonctionnalisation liquide et éventuellement de séchage desdits grains fonctionnalisés.

7. Méthode d'obtention d'un produit de pâte ou de pâte liquide pour une utilisation dans des produits de boulangerie, comprenant les étapes selon la méthode selon la revendication 6, et comprenant en outre l'étape d'incorporation desdits grains fonctionnalisés dans une pâte ou une pâte liquide.

8. Méthode de production d'un produit de boulangerie, comprenant les étapes selon la méthode selon la revendication 7, et comprenant en outre l'étape de cuisson de ladite pâte ou pâte liquide comprenant lesdits grains fonctionnalisés, afin d'obtenir un produit de boulangerie comprenant lesdits grains fonctionnalisés.

9. Méthode selon l'une quelconque des revendications 6 à 8, où la quantité totale d'ingrédients fonctionnels dans lesdits grains fonctionnalisés est d'au moins 40% en poids de la quantité totale desdits ingrédients fonctionnels dans ledit produit de pâte ou de pâte liquide.

10. Méthode selon l'une quelconque des revendications 6 à 9, où ladite étape de trempage permet d'obtenir des grains trempés ayant une teneur en matière sèche comprise entre environ 15% (p/p) et environ 80% (p/p) et/ou une teneur en matière sèche de la solution aqueuse de trempage inférieure à environ 10% lorsque les grains sont trempés dans quatre fois leur poids.

11. Méthode selon l'une quelconque des revendications 6 à 10, où lesdits ingrédients fonctionnels sont un ou plusieurs ingrédients choisis parmi les ingrédients salés ou de type salé, les sucres ou les édulcorants, l'éthanol, une ou plusieurs levures chimiques, les composés aromatiques diacétylés, naturels ou synthétiques, les arômes et/ou les composés exhausteurs d'arômes, les enzymes, les agents oxydants ou réducteurs, les émulsifiants, les polyols, les gommes, les matières grasses, les huiles, les matériaux gras, les acides organiques, les vitamines, les agents antimicrobiens, les agents colorants et/ou les microorganismes de qualité alimentaire.

12. Méthode selon l'une quelconque des revendications 6 à 11, où ladite suspension selon l'étape c) est maintenue pendant d'environ 1 à environ 30 minutes.

13. Méthode selon l'une quelconque des revendications 6 à 12, où ladite solution de fonctionnalisation liquide comprend entre 10 et 100% dudit ingrédient fonctionnel.

14. Méthode selon l'une quelconque des revendications 7 à 13, où au moins 1% en poids desdits grains fonctionnalisés sont incorporés dans ladite pâte ou pâte liquide.

15. Produit de boulangerie obtenu selon les méthodes selon l'une quelconque des revendications 8 à 14, préparé par la cuisson d'un produit de pâte ou de pâte liquide selon l'une quelconque des revendications 1 à 5.
